# EUROPEAN PATENT SPECIFICATION

(11) **EP 1 811 493 B1**
(45) Date of publication and mention of the grant of the patent: **24.04.2013**
(21) Application number: 05799987.2
(22) Date of filing: 31.10.2005
(51) Int. Cl.: G09G 5/00, G02B 27/02, G09G 5/36, H04N 5/64, G06F 3/048, G06F 3/033

(54) **VIDEO DISPLAY**
VIDEOANZEIGE
AFFICHEUR VIDEO

(30) Priority: 12.11.2004 JP 2004329135
(43) Date of publication of application: 25.07.2007
(73) Proprietor: NIKON CORPORATION, Chiyoda-ku Tokyo 100-8331 (JP); Nikon Systems Inc., Yokoyama-shi Kanagawa 2200012 (JP)
(72) Inventor: OTSUKI, Masaki, c/o NIKON CORPORATION,, Tokyo 1008331 (JP); KATO, Shigeru, c/o NIKON CORPORATION,, Tokyo 1008331 (JP); ISAGI, Kazuou, c/o NIKON CORPORATION,, Tokyo 100331 (JP); TAKASHINA, Tomomi, c/o NIKON CORPORATION,, Tokyo 1008331 (JP)
(74) Representative: Viering, Jentschura & Partner
(86) International application number: PCT/JP2005/020332
(87) International publication number: WO 2006/051743

(56) References cited:
- EP-A2- 0 871 055
- JP-A- 10 221 639
- JP-A- 2000 171 751
- JP-A- 2003 076 353
- JP-A- 2003 348 622
- JP-A- 2004 236 241
- US-A1- 2001 038 360
- US-B1- 6 445 363

## Description

### Technical Field

The present invention relates to a video display device which displays video images to the eyes of the wearer in a state in which the device is mounted on the head of the wearer (often called a "head-mounted display" and may be referred to as a "head-mounted display" in the present specification as well).

### Background Art

In recent years, various types of video display devices have been proposed which are used while mounted on the human body, such as ocular type devices in which video images displayed on a display device such as a liquid crystal panel (LCD) are observed as false images that are enlarged via an optical system having an ocular lens, half-mirror, or the like; such display devices are called "wearable displays." Among these devices, devices that are used while mounted on the head are particularly referred to as "head-mounted displays."

A display device and method comprising increasing a display are of a reception image are known e.g. from EP 0 871 055 A2.

In most cases, head-mounted displays are constructed so as to be mounted on the head in a form that is wrapped around the head. Such displays include displays of the both-eye type in which video display systems are formed in positions corresponding to both eyes, and displays of the one-eye type in which a video display system is formed in a position corresponding to one eye (left or right eye). Among these displays, displays of the both-eye type are used mainly for the purpose of enjoying videos. In the case of displays of the one-eye type, for example, methods involving use as the display device of a wearable personal computer or the like, or use as a display device which displays instructions to workers, may be expected. Publicly known examples include systems such as those described in Japanese Laid-Open Patent Application No. H8-305298 and Japanese Laid-Open Patent Application No. 2004-207847.

One problem that arises in head-mounted displays is that the edge parts of the screen may be difficult to see. In cases where the edge parts of a screen projected onto a screen are viewed in an ordinary movie theater or the like, the person viewing the image moves the line of sight by moving the eyeballs, and also at the same time, directs the line of sight toward the edge parts of the screen by turning the head.

However, in the case of a head-mounted display, when the head is turned, the overall image moves along with this turning movement, so that it is necessary to view the edge parts of the screen by moving only the eyeballs. Accordingly, until the user becomes accustomed to the display, there is a feeling that the edge parts of the screen are difficult to see.

The question of whether the eyeballs are mainly moved or the head is mainly rotated when viewing the edge parts of a screen depends on the person viewing the image. The latter persons, in particular, have the feeling that the display is extremely difficult to use until these persons become accustomed to the head-mounted display. This is especially a problem in cases where icons or the like are displayed over the entire image using the head-mounted display as the display terminal of a device.

A method in which movement of the head is detected, and the display video is moved in accordance with this movement is disclosed in Japanese Laid-Open Patent Application No. H7-95498 as a method for solving such problems. In this method, however, the following problems arise: namely, the device is complicated, and when the display video is moved, a portion of the screen is cut off.

Meanwhile, a method in which a screen is displayed in one portion of the visual field, and the display position of the screen is moved in accordance with the movement of the head is disclosed in Japanese Laid-Open Patent Application No. 2000-171751. In this method, however, the following problem is encountered: namely, since the screen is displayed in only one portion of the area that can inherently be used for display, the elements (icons or the like) that are displayed must be made smaller than the inherently displayable size, so that the display area cannot be effectively utilized.

### Disclosure of the Invention

The present invention was devised in light of such circumstances; it is an object of the present invention to provide a video display device which has the function of performing training so that the edge parts of the image that is displayed can be viewed by moving the eyeballs alone.

The invention provides a video display device according to claim 1, a preferred embodiment is subject of the dependent claim.

When the use time is small, the reduction ratio is set at a large ratio, so that the screen is displayed with a small size in the center of the visual field. Then, as the use time increases, the reduction ratio is gradually reduced, so that an ordinary screen is finally shown; thus, while the wearer is still not accustomed to use of the device, the image is concentrated near the center of the visual field, and as the wearer becomes accustomed to the device, the size of the image can be increased so that the image reaches the peripheral parts of the visual field. Thus, by using the device, the wearer naturally becomes able to view the edge parts of the image merely by moving the eyeballs, and becomes less likely to experience any uncomfortable feeling.

In cases where a plurality of persons use a single video display device, if the operation is simply performed using the use time of the video display device, the display cannot be performed in accordance with the extent to which the wearer has become accustomed to the device. Therefore, the use time may be stored in memory for each wearer, and the operation of the display device may be performed using the stored use time for each wearer. Accordingly, even in cases where a single video display device is used by a plurality of persons, separate displays can be performed in accordance with the extent to which these respective persons have become accustomed to the device.

### Brief Description of the Drawings

Figure 1 is a block diagram showing the schematic construction of a head-mounted display constituting one working configuration of the present invention.
Figure 2 is a diagram showing the first operation of the image control part.
Figure 3 is a diagram showing the second operation of the image control part.
Figure 4 is a diagram showing the third operation of the image control part.

### Best Mode for Carrying Out the Invention

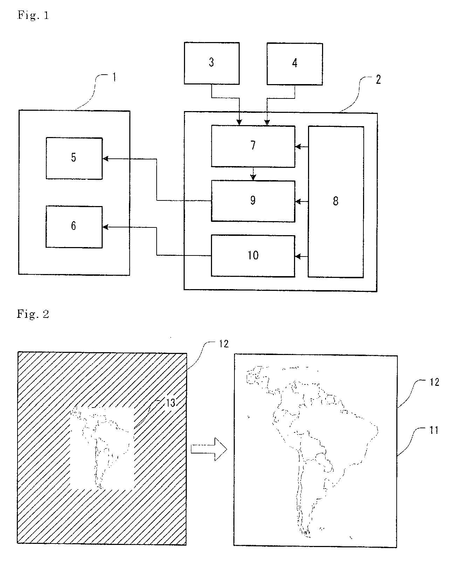

Below, a working configuration of the present invention will be described using the figures. Figure 1 is a block diagram showing the schematic construction of a head-mounted display constituting one working configuration of the present invention. This head-mounted display comprises a head mounting part 1 which is mounted on the head, a control part 2, an operating part 3, and a line of sight detection part 4.

An image display part 5 and an audio output part 6 are disposed in the head mounting part 1. The control part 2 is provided with an input control part 7 which has the function of receiving signals from the wearer that are input via the operating part 3, and storing the use frequency or use time of respective wearers, and the function of receiving signals from the line of sight detection part 4, and calculating the directional distribution of the line of sight of the wearer. The input control part 7 also has the function of performing the processing of operating signals that are input from the operating part 3; however, since this function has no direct bearing on the present invention, a description of this function is omitted here.

The control part 2 is also provided with a memory part 8 which stores images that are to be displayed and audio that is to be output to the head mounting part 1. The display images that are stored in the memory part 8 are converted by an image processing program in the image control part 9 into the images that are actually displayed, and are transmitted to the image display part 5 and displayed. The audio signals that are stored in the memory part 8 are adjusted by the audio control part 10, and are transmitted to the audio output part 6 and output as audio signals.

An example of the operation of the image control part 9 will be described below. The operation that is selected from the various operations is determined by the operation of the operating switch of the operating part 3, and the position of the operating switch is transmitted to the input control part 7.

Figure 2 is a diagram showing the first operation of the image control part 9. 11 indicates the image that is to be originally displayed; this image is displayed over the entire display area surrounded by a square frame 12. The image control part 9 has the function of reducing and displaying this overall image with the center of the image as the center. The reduced image that is reduced and displayed is indicated by 13. The image control part 9 displays the reduced image 13 during the initial stage of use of the head-mounted display. As the use frequency or use time of the head-mounted display (the selection of which of these is used is determined by the switch of the operating part 3) that corresponds to the wearer and that is input from the input control part 7 increases, the reduction ratio of the reduced image 13 is decreased, so that the size of the image is increased. After a specified use frequency or a specified use time is reached, the image 11 that is originally to be displayed is displayed.

The input control part 7 increases the number of times of use of the device by one increment each time that the power supply of the head-mounted display is switched on, and adds the use time while the power supply of the head-mounted display is switched on. In cases where the head-mounted display is used by a plurality of wearers, the use frequency or use time is calculated for each wearer code that is input from the operating part 3, and the control described above is performed using the use frequency or use time corresponding to each wearer.

As a result, the wearer initially concentrates his line of sight on the central portion of the visual field, and can receive training in expanding the visual field by the movement of the eyeballs as time passes. Accordingly, the wearer can naturally view the peripheral portions of the image display area by movement of the eyeballs alone.

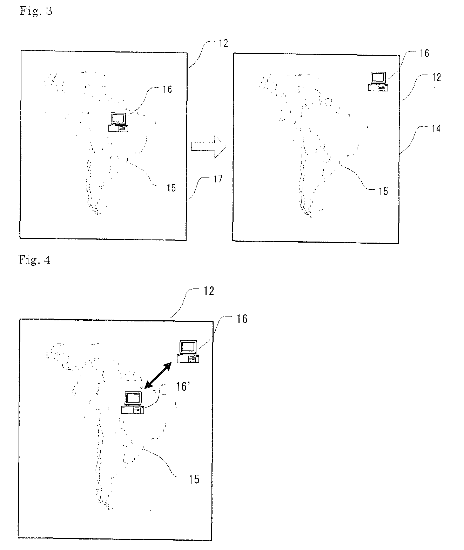

Figure 3 is a diagram showing the second operation of the image control part 9. 14 indicates the image that is to be originally displayed; this image is displayed over the entire image display area surrounded by a square frame 12. Furthermore, the display image includes a background 15 and an icon 16. The image control part 9 has the function of moving the position of the icon 16, which is a portion of this display image, to the central portion of the image from the inherent display position.

The actual image that is displayed in the initial stage of use of the head-mounted display is an image such as that indicated by 17; the background is invariable, but the position of the icon 16 is shifted toward the center of the image.

In the initial stage of use of the head-mounted display, the image control part 9 displays the initial-stage image 17. As the use frequency or use time of the head-mounted display (the selection of which of these is used is determined by the switch of the operating part 3) that corresponds to the wearer and that is input from the input control part 7 increases, the position of the icon 16 is successively shifted toward the outside of the screen. After a specified use frequency or specified use time is reached, the icon returns to the inherent display position, so that the image 14 that is originally to be displayed is displayed.

If this is done, then the wearer initially concentrates his line of sight on the icon 16 which is located in the central portion of the visual field. By viewing the icon 16 that moves toward the outside as time passes, the wearer receives training in expanding the visual field by movement of the eyeballs. Accordingly, the wearer can naturally view the peripheral portions of the image display area by movement of the eyeballs alone.

Figure 4 is a diagram showing the third operation of the image control part 9. 14 indicates the image that is originally to be displayed; this image is displayed over the entire display area surrounded by a square frame 12. Furthermore, the display image includes a background 15 and an icon 16. The image control part 9 has the function of causing the position of the icon 16, which constitutes a portion of this display image, to undergo a reciprocating movement between the inherent display position and a position in the central portion of the image (indicated by 16').

Moreover, in this reciprocating movement, the position in which the icon 16 is inherently displayed is fixed as one end point, and the other end point 16' of the reciprocating movement is shifted toward the outside of the screen as the use frequency or use time of the head-mounted display (the selection of which of these is used is determined by the switch of the operating part 3) that corresponds to the wearer and that is input from the input control part 7 increases, and after a specified use frequency or specified use time is reached, the icon returns to the inherent display position, so that the image 14 that is originally to be displayed is displayed.

If this is done, the wearer initially directs his attention toward the icon 16 when the icon reaches the position 16', which is in the central portion of the visual field. However, as time passes, the position where the icon is displayed moves toward the outside, so that the wearer can receive training in expanding the visual field by movement of the eyeballs. Consequently, the wearer can naturally view the peripheral portions of the image display area by movement of the eyeballs alone.

In the operations of the image control part 9 described above, the reduction and movement of the image are controlled in accordance with the use frequency or use time. Separately from this, however, it would also be possible to devise the system so that the reduction and movement of the image are controlled on the basis of the directional distribution of the line of sight as described above. Furthermore, a publicly known device such as that described in Japanese Laid-Open Patent Application No. H7-32008, for example, can be used as a device for detecting the line of sight.

In cases where the wearer is not accustomed to viewing the periphery of the screen, it is painful for the wearer to view this periphery. Accordingly, the time spent by the wearer viewing the periphery is small, so that the directional distribution of the line of sight within a specified time is concentrated near the central portion of the screen. As the wearer becomes accustomed to viewing the peripheral portions of the screen, the time spent viewing these peripheral portions increases, so that the directional distribution of the line of sight within a specified time is expanded to the peripheral portions and evened out.

Accordingly, for example, the standard deviation of the distribution of the angle of the line of sight centered on the direction of the center of the screen within a specified time may be taken, and this standard deviation may be used instead of the use frequency or use time described above. Specifically, when the standard deviation is small, a display is performed which is the same as that performed when the use frequency or use time is small, and as the standard deviation increases, the display may be varied to a display which is the same as that performed when the use frequency or use time has increased.

Furthermore, the proportions of the reduced display of the figures in the examples described above may also be determined by a combination of the use frequency or use time and the line of sight detection results. For example, the proportions of the reduced display of the figures may also be determined using the square root of the sum of the squares of the use time and the standard deviation of the fluctuation in the line of sight as a reference, or using the square root of the sum of the squares of the use frequency and the standard deviation of the fluctuation in the line of sight as a reference.

## Claims

1. A video display device which is adapted to display video images (11, 13) to the eyes of a wearer in a state in which the device is mounted on the head of the wearer, wherein the device comprises:
means (7) for calculating and storing the total amount of time that the video display device has been used by the wearer, and
means for reducing (9) the size of the image (13) that is displayed according to a reduction ratio, and for altering the reduction ratio in accordance with the total amount of time that the video display device has been used by the wearer, such that when the total amount of time increases, the reduction ratio is gradually reduced such that the size of the image (13) is increased.

2. The video display device according to Claim 1, wherein the means (7) for calculating and storing the total amount of time is further adapted for respectively calculating and storing the total amount of time that the video display device has been used by each wearer, and wherein the means (9) for reducing the size of the image (11, 13) is further adapted for altering the reduction ratio in accordance with the stored amount of time corresponding to the respective wearer.

## Patentansprüche

1. Video-Anzeigevorrichtung, die eingerichtet ist, um den Augen eines Trägers in einem Zustand, in dem die Vorrichtung an dem Kopf des Trägers angebracht ist, Videobilder (11, 13) anzuzeigen, wobei die Vorrichtung aufweist
Mittel (7) zum Berechnen und Speichern der Gesamtzeitdauer, die die Video-Anzeigevorrichtung von dem Träger benutzt wurde, und
Mittel zum Verringern (9) der Größe des Bildes (13), das angezeigt wird, gemäß einem Verringerungsverhältnis, und zum Ändern des Verringerungsverhältnisses gemäß der Gesamtzeitdauer, die die Video-Anzeigevorrichtung von dem Träger benutzt wurde, so dass, wenn die Gesamtzeitdauer zunimmt, das Verringerungsverhältnis graduell verringert wird, so dass die Größe des Bildes (13) vergrößert wird.

2. video-Anzeigevorrichtung gemäß Anspruch 1, wobei das Mittel (7) zum Berechnen und Speichern der Gesamtzeitdauer ferner angepasst ist, um jeweils die Gesamtzeitdauer, die die Video-Anzeigevorrichtung von jedem Träger benutzt wurde, zu berechnen und zu speichern, und wobei das Mittel (9) zum Verringern der Größe des Bildes (11, 13) ferner angepasst ist, um das Verringerungsverhältnis gemäß derjenigen gespeicherten Zeitdauer, die zu dem jeweiligen Träger korrespondiert, zu ändern.

## Revendications

1. Dispositif d'affichage vidéo qui est adapté pour afficher des images vidéo (11, 13) vers les yeux d'une personne qui le porte dans un état dans lequel le dispositif est monté sur la tête du porteur, le dispositif comprenant :
un moyen (7) pour calculer et stocker la durée totale pendant laquelle le dispositif d'affichage vidéo a été utilisé par le porteur ; et
un moyen (9) pour réduire la taille de l'image (13) qui est affichée selon une échelle de réduction, et pour modifier l'échelle de réduction selon la durée totale pendant laquelle le dispositif d'affichage vidéo a été utilisé par le porteur, de telle sorte que lorsque la durée totale augmente, l'échelle de réduction soit progressivement réduite de sorte que la taille de l'image (13) soit augmentée.

2. Dispositif d'affichage vidéo selon la revendication 1, dans lequel le moyen (7) pour calculer et stocker la durée totale est en outre adapté pour calculer et stocker respectivement la durée totale pendant laquelle le dispositif d'affichage vidéo a été utilisé par chaque porteur, et dans lequel le moyen (9) pour réduire la taille de l'image (11, 13) est en outre adapté pour modifier l'échelle de réduction selon la durée stockée correspondant au porteur respectif.
